# EUROPEAN PATENT APPLICATION

(11) **EP 2 180 741 A1**
(43) Date of publication of application: **28.04.2010**
(21) Application number: 08105675.6
(22) Date of filing: 27.10.2008
(51) Int. Cl.: H04W 24/02, H04W 16/26, H04W 52/02

(54) **Apparatus and method for dynamically deploying a network node**

(71) Applicant: Nokia Siemens Networks OY, 02610 Espoo (FI)
(72) Inventor: Raaf, Bernhard, 82061 Neuried (DE); Redana, Simone, 81541 München (IT); Teyeb, Oumer, 9000 Aalborg (DK); Van Phan, Vinh, 90100 Oulu (FI)
(74) Representative: Bruglachner, Thomas E.

(57) **Abstract**

A Deploying Apparatus (100, 502, 503) for dynamically deploying a Relaying Apparatus (101) is described. The Deploying Apparatus (100, 502, 503) comprises an Evaluating Device (300) and a Deploying Device (301).

The Evaluating Device (300) is adapted for determining an available network configuration and for determining a required network configuration.

The Deploying Device (301) is adapted for meeting the required network configuration by deploying at least one Network Apparatus of the group of Network Apparatuses consisting of a Relaying Apparatus and the Deploying Apparatus in accordance with the required network configuration.

## Description

### Technical field of the invention

The present invention relates to telecommunication networks. In particular the present invention relates to a Deploying Apparatus, to a Relaying Apparatus, to a method for dynamically deploying a Network Apparatus, to a method for relaying, to a computer readable medium and to a use of a System Information Block Information Element.

### Background of the invention

Relay stations (RSs) or Relay Nodes (RNs) have been proposed as coverage extensions in cellular systems since several years ago. Apart from this goal of coverage extension, introducing relay concepts may also help in provision of high-bit-rate coverage in high shadowing environment, reducing average radio-transmission power at the User Equipment (UE), thereby leading to long battery life enhancing cell capacity and effective throughput, e.g., increasing cell-edge capacity and balancing cell load and enhancing overall performance and deployment cost of RAN (Radio Access Networks).

The document IEEE 802.16e, " IEEE Standard for Local and metropolitan area networks Part 16: Air Interface for Fixed and Mobile Broadband Wireless Access Systems Amendment 2: Physical and Medium Access Control Layers for Combined Fixed and Mobile Operation in Licensed Bands and Corrigendum 1", from IEEE (Institute of Electrical and Electronics Engineers) Computer Society, 28 February 2006, may describe subscriber stations moving at vehicular speeds and thereby may specify a system for combined fixed and mobile broadband wireless access.

The IEEE standard document P802.16Rev2/D6, " DRAFT Standard for Local and metropolitan area networks Part 16: Air Interface for Broadband Wireless Access Systems", July 2008, may specify the air interface, including the medium access control layer (MAC) and physical layer (PHY), of combined fixed and mobile point-to-multipoint broadband wireless access (BWA) systems providing multiple services. The MAC may be structured to support multiple PHY specifications, each suited to a particular operational environment.

The standard document IEEE 802.16j/D6a, "DRAFT Amendment to IEEE Standard for Local and Metropolitan Area Networks - Part 16: Air Interface for Fixed and Mobile Broadband Wireless Access Systems - Multihop Relay Specification", July 2008, may specify multihop relays as an optional deployment that may be used to provide additional coverage or performance in an access network.

The 3GPP (3rd Generation Partnership Project) document TS 36.300, "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2", Release 8, V8.6.0, 2008-09, may provide an overview and overall description of the E-UTRAN radio interface protocol architecture.

The 3GPP document TS 36.321, "3rd Generation Partnership Project; Technical Specification Group Radio Access Network; Evolved Universal Terrestrial Radio Access (E-UTRA) Medium Access Control (MAC) protocol specification", Release 8, V8.3.0, 2008-09, may specify the E-UTRA MAC protocol.

The 3GPP document TS 36.331, "3rd Generation Partnership Project; Technical Specification Group Radio Access Network; Evolved Universal Terrestrial Radio Access (E-UTRA) Radio Resource Control (RRC);Protocol specification", Release 8, V8.3.0, 2008-09, may specify the Radio Resource Control protocol for the UE-E-UTRAN radio interface.

The 3GPP document TS 36.423, "3rd Generation Partnership Project; Technical Specification Group Radio Access Network; Evolved Universal Terrestrial Radio Access Network (E-UTRAN); X2 application protocol (X2AP)", Release 8, V8.3.0, 2008-09, may specify the radio network layer signalling procedures of the control plane between eNBs in E-UTRAN.

It may be a need to operate a Relay Node efficiently.

### Summary of the invention

According to an exemplary embodiment of the present invention a Deploying Apparatus, a Relaying Apparatus, a method for dynamically deploying a Network Apparatus, a method for relaying, a computer readable medium and a use of a System Information Block Information Element may be provided.

According to another exemplary embodiment of the present invention a Deploying Apparatus for dynamically deploying a Relaying Apparatus may be provided. The Deploying Apparatus may comprise in an example an Evaluating Device and a Deploying Device.

In a further example, the Evaluating Device may be adapted for determining an available, a current or an actual network configuration and the Evaluating Device may further be adapted for determining a required network configuration. The required network configuration in an example may depend on an actual demand requested by User Equipments.

Furthermore, in an example the Deploying Device may be adapted for meeting the required network configuration by deploying at least one Network Apparatus of the group of Network Apparatuses consisting of a Relaying Apparatus and the Deploying Apparatus in accordance with the required network configuration. In other words, the Deploying Device may control the availability of Network Apparatuses in accordance with the demand from the User Equipment.

According to another exemplary embodiment of the present invention a Relaying Apparatus may be provided. The Relaying Apparatus in an example may comprise a Relaying Device, an Up-Linking Device and a Down-Linking Device.

As an example, the Up-Linking Device may be adapted for identifying a Deploying Apparatus supporting a Relaying Apparatus. In another example, the Up-Linking Device may be adapted for linking the identified Deploying Apparatus with the Relaying Apparatus, wherein the Down-Linking Device may be adapted for linking at least one User Equipment with the Relaying Apparatus. For example, the Relaying Device may be adapted for relaying information between the at least one User Equipment and the Deploying Apparatus.

According to yet another exemplary embodiment of the present invention a method for dynamically deploying a Network Apparatus may be provided. The method may comprise in an example determining an available network configuration and determining a required network configuration.

Furthermore, in an example, the method may comprise meeting the required network configuration by deploying at least one Network Apparatus selected from the group of Network Apparatuses consisting of a Relaying Apparatus and the Deploying Apparatus in accordance with the required network configuration.

According to yet another exemplary embodiment of the present invention, a method for relaying may be provided. The method in an example may comprise identifying a Deploying Apparatus supporting a Relaying Apparatus. Furthermore in an example, the method may comprise linking the identified Deploying Apparatus with the Relaying Apparatus, linking at least one User Equipment with the Relaying Apparatus and relaying information between the at least one User Equipment and the Deploying Apparatus.

According to a further exemplary embodiment of the present invention, a computer readable medium may be provided. In an example, the computer readable medium may comprise program code, which program code when being executed on a processor may be adapted to carry out at least one method selected from the group of methods consisting of the method for dynamically deploying a Network Apparatus and the method for relaying.

A computer-readable medium may be a floppy disk, a hard disk, an USB (Universal Serial Bus) storage device, a RAM (Random Access Memory), a ROM (read only memory) and an EPROM (Erasable Programmable Read Only Memory). A computer readable medium may also be a data communication network, e.g. the Internet, which may allow downloading a program code.

According to yet another exemplary embodiment of the present invention a program element may be provided. In an example, the program element may be adapted when being executed on a processor to carry out at least one method selected from the group of methods consisting of the method for dynamically deploying a Network Apparatus and the method for relaying.

According to another exemplary embodiment of the present invention a use of a System Information Block Information Element may be provided. The use may comprise utilizing the System Information Block for transmitting at least information selected from the group of information consisting of a cell load, a geographical location where a Deploying Apparatus may experience a capacity and/or a coverage problem and/or degradation, a supported mode of relaying and an energy saving setting.

The Evaluating Device of the Deploying Apparatus may allow determining a current network configuration, this may be the network configuration that may exist in the moment. The Evaluating Apparatus further may allow determining an actual demand on behalf of users or User Equipments (UEs) to the network. Thus, the Evaluating Device may allow determining a required network configuration to cope with the demand.

Therefore, the Evaluation Device or Evaluating Device may be adapted to determine required amendments of the network configuration due to an amended demand. The Evaluating Device may utilize advanced network planning methods and/or network planning procedures to determine the required amendments.

Advanced network planning methods may differ from semi-static configuration and deployment. In other words, advanced network planning may comprise online network planning, i.e. the network planning may be part of a closed loop, which may periodically monitor the network, conduct network planning and deploy network elements according to the network planning. Thus, a manual network planning may be prevented. Thus, the Deploying Apparatus may comprise a planning device, which may provide a network configuration according to predefined rules.

In an example, the network planning or the online network planning may comprise Radio Resource Management (RRM), Operation and Maintenance (O&M), e.g. at least one of interference planning, load controlling, inter-cell interference coordination, load balancing, network performance enhancement, quality of service (QoS) optimization, energy saving optimization, capacity optimization and coverage optimization.

For example the Deploying Device may be adapted to control or deploy the network components or Network Apparatuses to meet the amended network configuration. The Deploying Device may activate or deactivate a network component as needed, e.g. a Relaying Apparatus and/or a Deploying Apparatus.

The Relaying Apparatus may be adapted to connect with the Linking Devices to the Deploying Apparatus and to at least one User Equipment. Thus, the Relaying Device may be able to forward information received from the Deploying Apparatus to a corresponding User Equipment.

When connecting to a Deploying Apparatus, the Relaying Device may identify a plurality of available and/or valid Deploying Apparatuses which may be relevant for the Relaying Device. These identified Deploying Apparatuses may allow the Relaying Apparatus to connect to them.

The Relaying Apparatus however, may employ selecting criteria in order to find a Deploying Apparatus to which the Relaying Apparatus may connect. This way of selecting a Deploying Apparatus may allow to support and/or to cooperate with the Deploying Apparatus, in order to adapt a network configuration to an actual or current need.

In other words, the Deploying Apparatus may try to implement an appropriate network configuration by reselecting, handing over, activating and/or deactivating a Deploying Apparatus and/or a Relaying Apparatus. And the Relaying Apparatus may try to find an appropriate network configuration by becoming associated with an appropriate Deploying apparatus, in order to prevent, that the Deploying apparatus may have to reselect, to hand over, to activate and/or to deactivate the Relaying Apparatus once the Relaying Apparatus may have connected to a Deploying Apparatus. For example the Relaying apparatus may not connect to a Deploying Apparatus which might be switched off soon.

Thus, the Deploying Apparatus and the Relaying Apparatus may form a communication system which may implement a network configuration tailored to the actual demand of UEs and the desirable overall network operation and performance.

Relay systems or relay nodes may have achieved a level of maturity that may allow ongoing standardization activities to incorporate and specify it.

Employing of relays may also be considered in LTE (Long Term Evolution) standardization. Relay systems may be expected to be economically viable due to reduced backhaul and site acquisition costs.

In order to keep LTE competitive relays may be utilized as cost effective relay extensions to LTE. The experience gathered from employing relays may also be used regarding LTE Advanced (LTE-A) standardization.

Many kinds of relay systems may exist starting from an example for a simple relay system e.g. an amplify/forward system which may be applied in single frequency DVB-H (Digital Video Broadcasting - Handhelds) networks, for example.

An example for a complex relay system may be a relay system, which may utilize a network coding to improve the overall performance.

A basic relay type that may be proposed for cellular relaying may be a detect/forward type of relay. In a detect/forward relay type an input signal may be detected and may be retransmitted or relayed using the same procedure as in the original transmission. Such an approach may be assumed in an example of this text.

Relaying may be realized at the different layers of the protocol stack.

An example of simple amplify/forward relaying (Amplify and/or forward relaying) may be realized at the L1 (Network Layer 1, Physical Layer) of the protocol stack where the relay may only have at least some part of the PHY layer (Physical Layer).

Decode/forward (decode and/or forward) L2 (Network Layer 2, Data Link Layer) RNs (Relay Nodes), which may comprise the relaying protocol stack up to the MAC (Medium Access Control)/RLC (Radio Link Control) layers, may enable the possibility of doing decentralized radio resource management.

L3 (Network Layer 3, Network Layer) or higher layer RNs could almost be considered as wireless base stations and may support substantially all the protocol layers of normal base stations. L3 or higher layer relaying may be assumed in this text as an example.

Thus, a Relay Node, an RN, a Relaying Apparatus or a Relay Station may differ from a base station, from a Node B (NB) or from an enhanced Node B (eNB) in the limited number of protocols and functionality thereof which the RN may support. Moreover, RN may be connected to the network via a wireless backhaul.

In order to make LTE-A (Release 10 of LTE and beyond) economically viable, it may be considered to make it as much backward compatible with Release 8/9 of LTE as possible. Providing the backward compatibility with Release 8/9 of LTE may allow users to utilize relaying with their Release 8/9 terminals or User Equipments (UEs). In other words this may mean from UE side, i.e. Rel'8/9 (Release 8/9) and LTE-A terminals should work substantially equally well in Rel'8/9 and LTE-A networks. In an example relaying and backward compatibility may also be implemented in beyond Release 10.

At the network side software and even hardware updates between standard releases may be possible but they should be as small as possible. Hence, from UE viewpoint the serving network node should function in substantially exactly the same way as Rel'8 eNB. A network node or a RN may be able to be retrofit in order to support LTE-A.

RNs may be assumed to be deployed by the operator within a certain area, especially on hot spots and locations that may be expected to suffer from coverage loss, e.g. cell edges and high shadowing areas. Each RN may be associated with a controlling eNB (enhanced NodeB), which may also be referred to as a "mother eNB" or meNB. A static association with a mother eNB may mean a fix association with the corresponding meNB.

Such a static association however, may limit the flexibility/efficiency of a relay based network.

Therefore, it may be seen as an aspect of the present invention to provide methods, procedures, apparatuses, network systems and mechanisms to enable a dynamic deployment of RNs, which may enable a flexible association of RNs to eNBs based on current system needs instead of fixed associations through network planning.

Thus, a network node, e.g. the Deploying Apparatus may monitor the current status of the network, the current network configuration or the current network state and may determine the current or the present needs in the network.

The present needs in the network may be to satisfy or to serve the current traffic volume in a network or the current load of individual network components such as Deploying Apparatuses. Serving the current traffic volume may mean serving a maximum of traffic with minimal number of network equipment or with a minimum energy consumption or with minimal costs.

Dynamically deploying network resources may help to balance the actual network needs and the available resources. Or in other words dynamically deploying network resources may help tailoring the network to requests for network resources by users or UEs.

One example may be that the controlling eNB or the Deploying Apparatus may be overwhelmed by a high load within its cell, while an RN belonging to a neighboring cell may be substantially unloaded. In this case, it may be helpful if the RN may become associated with the highly loaded cell and may help to share some of the load. Therefore, a handover of the RN may be applied.

In another example due to the non linearity aspects of power amplifiers used in eNBs, it may be energy inefficient to run a system with several lightly loaded cells. Such a situation may happen, for example, during late night hours on weekdays. Thus, devising schemes may be provided in order to reduce the transmission power or even substantially completely powering off sectors of some eNBs or even the whole eNBs, and concentrating the system load on few eNBs in fully loaded, energy efficient mode. If the eNBs that may have to be powered off may be relay enabled and may control some RNs, it may also be desired to associate these RNs with the eNBs that are still active, instead of rendering them useless when their controlling eNB may be powered off. Therefore, before powering off an eNB the eNB may handover the RN to an eNB which may stay active.

In yet another example the linearity aspects of power amplifier may also be applied to RNs, i.e. an RN may be deactivated if the cell of the corresponding RN may be slightly loaded and the capacity and/or coverage of the cell not be needed by a neighboring cell. For instance, areas like shopping centers, stadiums, etc may be highly loaded only at certain hours, e.g. Saturday afternoon, etc., and therefore no need may exist to provide high capacity during times when they are only lightly loaded.

In yet another example, static association may limit the system to support only stationary RNs, and thus mobile RNs, for example, RNs attached to trains, may not be used. A dynamic deployment may allow supporting of mobile RNs.

In a further example self organization may be one feature which may be provided to cellular operators with future LTE releases. Networks which may support self organization may be known as Self Organizing Networks (SON). Dynamic deployment, where the RNs can work in plug-and-play fashion, may thus be a requirement in an SON network that may support relaying.

Generally speaking, a Deploying Apparatus may have a set of rules, at least one rule or at least one policy, which may allow the Deploying Apparatus to react to certain network scenarios. The rules in an example may allow generating signal sequences and/or commands, which may allow deactivating and/or reactivating an RN or which may allow handing over an RN from a source mother eNB to a target mother eNB in accordance with the rules. The signals and/or commands in an example may be generated in a signaling device which may be included in the Deploying Apparatus.

Thus, the network comprising a Deploying Apparatus may be a closed control loop, wherein the Deploying Apparatus may monitor periodically the actual network configuration and/or the actual demands from users. The Deploying Apparatus may compare the actual network configuration with a network configuration which the Deploying Apparatus may have determined using the actual network demand as an input. Thus, the Deploying Apparatus may determine a difference between a monitored network configuration and a needed network configuration and the Deploying Apparatus may generate a signal in order to minimize the difference. Thus, a target/actual comparison, nominal/actual value comparison, variance comparison, a set-actual comparison and/or a target-performance comparison may be conducted.

Thus, the Deploying Apparatus may determine that the actual network configuration may have to be amended to support the actual traffic demand or some other demand. An amendment of the actual network configuration may be conducted if the actual demand may be satisfied with another configuration with reduced overall cost. The costs may be power consumption, an increased coverage or an increased quality of service parameter (QoS).

After determining an amended network configuration, the Deploying Apparatus may adapt the network configuration accordingly.

The Deploying Apparatus may use measurements gathered from the UEs, from the RNs or from the Deploying Apparatuses for monitoring the demand. Thus, for example traffic demands, service degradations or interferences may be determined.

The Deploying device may react to amended traffic demands by activating or deactivating Network Apparatuses such as Deploying Apparatuses or RNs or by rearranging associations of RNs with corresponding Deployment Apparatuses.

In an example, the Deploying Apparatus may generate a corresponding signal sequence, a corresponding message and/or a corresponding command.

The way of reacting to certain determined situation may be stored in rules on the Deploying Apparatus. In other words, the Deploying Apparatus may monitor the network configuration, e.g. by measurements and may conduct a network planning method. The output of the network planning method may be an amended network configuration.

The Deploying Apparatus may comprise a Planning Device which may be adapted for executing the network planning function.

The Deploying Apparatus, e.g. by continuously or periodically monitoring the network, may have an actual view or overview of/over the actual or the current network configuration, in particular over the association of individual RNs with Deploying Apparatuses, over the actual activation status (activated or deactivated) of the RNs and/or over the actual load of Network Apparatuses such as RNs or Deploying Apparatuses.

The monitoring may happen in certain periods, the duration and/or chronological distance of which may be able to be predefined.

According to another exemplary embodiment of the present invention the Deploying Apparatus may further comprise an Associating Device. In an example the Deploying Device may be adapted for associating the Relaying Apparatus with the Associating Device in order to deploy at least one Network Apparatus.

Once a Network Apparatus may be associated with an Associating Device, the Associating Device may allow controlling the Network Apparatus, e.g. a Relaying Apparatus, via the Associating Device, which Network Apparatus may be associated or linked to the Associating Device.

According to yet another exemplary embodiment of the present invention the Deploying Device may be adapted for deactivating at least one of the Relaying Apparatus and the Deploying Apparatus in order to meet the required or defined network configuration. In one example, the Deploying Device may be adapted for handing over the Relaying Apparatus and/or a User Equipment associated with the Relaying Apparatus to another Deploying Apparatus in order to meet the required network configuration. A signal, a message and/or a command may be generated in order to control the handing over or the relocation. The signal may be generated in a Signalling Device, which may be included in the Deploying Apparatus.

By handing over the Relaying Apparatus and/or by reselecting the Relaying Apparatus, the Deploying Apparatus may be able to associate the Relaying Apparatus with a Deploying Apparatus, which may need additional capacity.

In an example the Relaying Apparatus may have in the direction to the network a User interface, for example a Uu interface. In other words, the Deploying Apparatus may handle the Relaying Apparatus as a User Equipment. Therefore, handover methods for UEs may be applicable for the Relaying Apparatus. In an example, in contrast to a User Equipment a Relaying Apparatus may be located at a substantially fixed location. In other words, whereas a UE may be mobile and the mobility may require handing over the UE from one Deploying Apparatus to another, a Relaying Apparatus may be handed over due to network planning purposes. Thus, handover methods may be utilized in order to hand over a fixed Relaying Apparatus from one Deploying Apparatus to another.

According to another exemplary embodiment of the present invention the Associating Device may be adapted for deactivating a Relaying Apparatus. In an example the Relaying Apparatus may try to become associated with the Associating Device.

A Relaying apparatus may try periodically connecting to a Deploying Apparatus. However, the Relaying Apparatus may have a different view to the network than the Deploying Apparatus. Thus, the Deploying Apparatus may decide, whether the Relaying Apparatus may be allowed to connect to the Deploying Apparatus in order to meet an amended network configuration. Thus, the Deploying Apparatus may be a master. A master may be a network component, which may decide about the network configuration, as the master may have an overall view of the network.

According to yet another exemplary embodiment of the present invention the Deploying Apparatus and / or the Relaying Apparatus may be at least one of the group of apparatuses consisting of a Relay Node, an enhanced Node B (eNB),a relay enhanced Node B, a mother enhanced Node B (meNB),a base station (BS), an enhanced Node B relay (eNBr), a WiMAX^{™} network node, a GSM (Global System for Mobile Communications) network node, a UMTS (Universal Mobile Telecommunications System) network node, and an LTE (Long Term Evolution) network node.

According to another exemplary embodiment of the present invention the Evaluating Device may be adapted for determining at least one of a cell load and a load of the Relaying Apparatus, wherein the Deploying Apparatus may be adapted for deploying the Deploying Apparatus and/or the Relaying Apparatus in accordance with the determined load.

In an example the cell load may be the traffic per cell, the load of the Relaying Apparatus may be the traffic or the traffic demand per Relaying Apparatus. Traffic may be bandwidth requirement or a bit rate requirement.

The cell load may further be determined by determining the radio transmit power and/or the interference dimension, in addition to the bandwidth or to the bit rate. During determining the cell load, interference control and interference coordination within a cell and between neighbouring cells may be taken into consideration.

Determining the cell load and/or the load of a Relaying Apparatus may allow adapting an actual network configuration to an actual demand, e.g. to an actual load demand.

According to yet another exemplary embodiment of the present invention the Evaluating Device may be further adapted for transmitting a neighbour list to at least one other Deploying Apparatus, wherein the neighbour list may comprise alternative Deploying Apparatuses.

The list may also comprise, in addition to alternative Deploying Apparatuses, other information about the status of the actual network configuration. Such a list or exchanging such a list may help a plurality of Deploying Apparatuses to exchange information about the network configuration and to get a picture of the actual situation within the network.

According to a further exemplary embodiment of the present invention the Associating Device may be adapted for indicating that the Associating Device may support a Relaying Apparatus by at least one indication selected from the group of indications consisting of broadcasting an indication and replying to a query of the Relaying Apparatus.

Broadcasting of the capability, e.g. via a control channel, may be a proactive way of informing other apparatuses such as a Relaying Apparatus about the capability of a Deploying Apparatus. Thus, a query or a request may not be necessary.

Replying to a query may allow individually answering to a request. In other words, the request may be answered only when a request may have been made. Such on-demand behaviour may help in saving energy.

According to another exemplary embodiment of the present invention the Up-Linking Device may be adapted for identifying a relaying capability of the Deploying Apparatus by at least one method selected from the group of identifying methods consisting of receiving a broadcast from the Deploying Apparatus and requesting capability information from the Deploying Apparatus.

The relaying apparatus may generate a list comprising substantially all Deploying Apparatuses which may be relevant for the Relaying Apparatus.

According to another exemplary embodiment of the present invention the Up-Linking Device may be adapted for selecting at least one of a plurality of identified Deploying Apparatuses by at least one selection criteria of the group of selection criteria consisting of selecting the Deploying Apparatus with the highest path gain, selecting the Deploying Apparatus in whose cell the Relaying Apparatus may be geographically located in, selecting the Deploying Apparatus with the highest load, selecting the Deploying Apparatus that can provide the highest data rate of the Deploying Apparatuses to the Relaying Apparatus, selecting the Deploying Apparatus that may have a coverage and/or capacity provision problem in the vicinity of the Relaying Apparatus, selecting a Deploying Apparatus that may stay powered on and selecting the Deploying Apparatus that may match a relaying mode of the Relaying Apparatus.

The selection criteria may allow the Relaying Apparatus before connecting to a Deploying Apparatus to verify whether the Deploying Apparatus may support the Relaying Apparatus and whether the Deploying Apparatus may need the Relaying Apparatus to provide a network configuration adapted to an actual demand.

The vicinity of a Relaying Apparatus may be an area around the Relaying Apparatus, in which a User Equipment may be able to receive a signal from the Deploying Apparatus.

According to another exemplary embodiment of the present invention the Down-Linking Device may be adapted for synchronizing the User Equipment when the Up-Linking device may be handed over to another Deploying Apparatus.

The Deploying Apparatus and the other Deploying Apparatus may not be synchronized or may be out of an acceptable or a predeterminable difference range to be synchronized. Thus, synchronizing the user equipment may allow the User Equipment to correspond with the other Deploying Apparatus.

According to another exemplary embodiment of the present invention the Up-Linking Device may be further adapted for listening to a common control channel if the Relaying Apparatus may be in a deactivated state.

Listening to a predefined control channel may allow activating a Relaying Apparatus from a deactivated state. Thus, periodically waking up of the Relaying Apparatus may be prevented. Periodically waking up may consume energy or power and therefore, waiting for a request to leave the deactivated state and to enter the activated sate may help saving energy or power.

According to another exemplary embodiment of the present invention the Up-Linking Device may be further adapted for periodically re-activating the Relaying Apparatus from a deactivated state, wherein the Up-Linking Device may be adapted for selecting the Deploying Apparatus.

If the Relaying Apparatus may be allowed to connect to the Deploying Apparatus, by periodically re-activating the Relaying Apparatus may allow quickly to connect or to associate the Relaying Apparatus to/with a corresponding Deploying Apparatus.

According to another exemplary embodiment of the present invention a method for utilizing a System Information Block Information Element (SIB IE) may be provided. The method may comprise utilizing the SIB IE for transmitting at least information selected from the group of information consisting of a cell load, a geographical location where a Deploying Apparatus may be experiencing capacity and/or coverage problem or degradation, a supported mode of relaying and an energy saving setting.

It may be seen as a gist of the present invention to provide relays in mobile wireless communications (LTE) networks and specifically to provide a way a relay node can be dynamically deployed within a network.

In general a relay node may be deployed by an operator within a certain area, especially on hot spots and locations that may be highly likely to suffer from coverage loss, e.g. cell edges and high shadowing areas. Each relay node may be associated with a controlling eNB (access node), which may also be referred to as a "mother eNB".

An aspect may be to prevent associations, which may be static and which therefore may limit the flexibility/efficiency of such a relay based system.

A dynamic association of the relay node or nodes may be provided, wherein in case of a high traffic load within a cell a relay node may be able to change the access node to which the relay node may be associated for better or amended load balancing. The hand over may be a kind of temporary handover.

Furthermore, better or amended load balancing may also allow for better energy efficiency throughout the system of relay nodes. In other words, by load balancing actions such as balancing a bandwidth between a plurality of network nodes the total network load may be substantially equally distributed over the elements of the network. Also a dynamic association may aid in the added requirements of self optimized networks for efficiency and adaptability of the network. Thus, the relay node or the Relaying Apparatus may be deployed or switched on, where a high network load may be. For example, the relay node may be deployed such that the deployed relay node may handle a load from an overloaded other node.

An aspect of the invention may be providing the capability for dynamically associating a relay node to a NB based on certain procedures.

Another aspect may be the identification of eNBs that support relaying, i.e. those that can operate as mother eNB.

In yet another aspect a selection of a mother eNB may be conducted.

In a further aspect, a reselection/handover of an active RN from the current mother eNB to another eNB may be conducted.

In yet another aspect, on demand deactivation/ reactivation of a RN may be provided if its relayed UEs can be properly served by another RN or directly by the mother eNB.

Thus, selection of the eNB may occur after the identification of which NBs support relay nodes.

It has also to be noted that exemplary embodiments of the present invention and aspects of the invention have been described with reference to different subject-matters. In particular, some embodiments have been described with reference to apparatus type claims whereas other embodiments have been described with reference to method type claims. However, a person skilled in the art will gather from the above and the following description that unless otherwise notified, in addition to any combination of features belonging to one type of subject-matter, also any combination between features relating to different subject-matters, in particular between features of the apparatus claims and the features of the method claims, may be considered to be disclosed with this application.

These and other aspects of the present invention will become apparent from and elucidated with reference to the embodiments described hereinafter.

Exemplary embodiments of the present invention will be described in the following with reference to the following drawings.

### Brief description of the drawings

Fig. 1 shows a first message flow diagram for identifying a relay support by a broadcast message according to an exemplary embodiment of the present invention.
Fig. 2 shows a second message flow diagram for identifying a relay support by querying an eNB according to an exemplary embodiment of the present invention.
Fig. 3 shows a block diagram of a Deploying Apparatus according to an exemplary embodiment of the present invention.
Fig. 4 shows a block diagram of a Relaying Apparatus according to an exemplary embodiment of the present invention.
Fig. 5 shows a message flow diagram for handing over a Relaying Apparatus with associated UEs from a source Deploying Apparatus to a target Deploying Apparatus according to an exemplary embodiment of the present invention.
Fig. 6a shows a message flow diagram for deactivating a Relaying Apparatus wherein the Relaying Apparatus is in at least one of a L1 relay mode and a L2 relay mode according to an exemplary embodiment of the present invention.
Fig. 6b shows a message flow diagram for deactivating a Relaying Apparatus wherein the Relaying Apparatus is in a L3 relay mode according to an exemplary embodiment of the present invention.
Fig. 7 shows a message flow diagram for handing over of a UE from a source Relaying Apparatus to a target Relaying Apparatus according to an exemplary embodiment of the present invention.
Fig. 8 shows a network diagram of an LTE radio access network deployment with fixed and/or static RNs for a better understanding of the present invention.

### Detailed description

The illustration in the drawings is schematic. In different drawings, similar or identical elements are provided with the same reference numerals.

In order to enable a substantially fully dynamic deployment of RNs, some procedures may be required.

eNBs or Deploying Apparatuses that support relaying are identified by the Relaying Apparatus, i.e. those eNBs are identified that can operate as mother eNB. Thus, the Relaying Apparatus may have a list or a plurality of eNBs which may support relaying.

From the plurality of identified eNBs, a mother eNB may be selected according to predefined rules or selection criteria.

An active RN may be reselected and/or handed over from the current mother eNB to another eNB if required.

An RN may be deactivated on demand if its relayed UEs can be properly served by another RN or directly by the mother eNB. Also, an RN may be reactivated when the RN is needed to provide capacity and/or coverage enhancement.

In the following these different procedures are described in more detail.

For identifying of relay support in an eNB, different exemplary embodiments may exist.

It is assumed that the LTE-A eNBs should coexist with LTE release 8 eNBs, i.e. eNBs according to the LTE standard release 8, and as such, it may be necessary for the RN or the Relaying Apparatus to identify the eNBs that can support relaying, referred to as *eNBr* henceforth.

In release 8, eNBs broadcast cell or PLMN (Public Land Mobile Network ) level information using a Master Information Block (MIB) in the BCH (Broadcast Channel) and System Information Block (SIB) in DL-SCH (Down-Link Shared Channel) channels. In other words, eNBs may utilize a MIB and or a SIB for distributing cell specific information and/or PLMN system information. Similar to this, an eNB supporting relaying can broadcast its relaying capability and associated information by defining an IE (Information Element) based on an SIB IE as specified for LTE E-UTRAN in e.g. TS 36.331, which may be ignored by UEs and may be recognized only by the RNs.

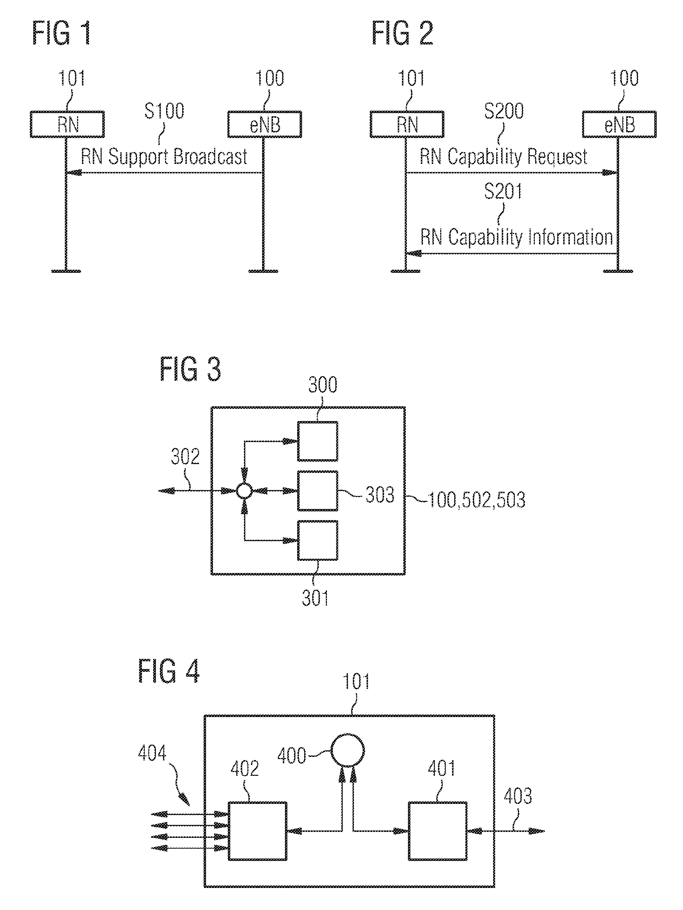

A first message flow diagram for identifying a relay support by a broadcast message according to an exemplary embodiment of the present invention is illustrated in Fig. 1.

Fig. 1 illustrates a deployment scenario of LTE radio access network (RAN) with possible radio relayed extensions. Thus, Fig. 1 shows the identification of a relay supporting eNBs through the broadcast of System Information Blocks.

The eNB 100 periodically sends in step S100 an RN Support Broadcast message, indicating that the eNB 100 or indicating that the Deploying Apparatus 100 supports relaying.

If a Relay Node 101 or RN 101 receives the broadcast message, the Relay Node 101 knows without requesting that eNB 101 supports relaying, i.e. eNB 101 or Deploying Apparatus 101 proactively transmits the RN Support Broadcast message.

At the network side, i.e. in the eNB, software and even hardware updates between standard releases may be possible but they should be as small as possible. Hence, from UE viewpoint the serving network node should function in the same way as Rel'8 eNB. Hence, from the UE's viewpoint the serving network node should function in the same way as Rel'8 eNB. Due to this requirement the reduction of eNB functionalities when defining a relay node may be difficult and relays need to support all main eNB functions. Due to this fact it may be assumed that relays (RNs) are capable of flexibly sharing a resource with the eNB that controls them.

Moreover, it may be assumed that at maximum 2 hops are allowed in the system, e.g. the hops between eNB-UE or between eNB-RN-UE.

Furthermore, a tree topology may be assumed, i.e. no connections between relays.

These two assumptions may help to simplify the system setting but it is emphasized that the invention can be extended to cover also other network topologies.

Within Release 8 there may have been an extension mechanism defined that allow to define new messages on the BCCH (Broadcast Control Channel) that UEs according to a release having a lower number than 8 may not understand but they may be aware that these information may not be essential for them and can be safely ignored by them. A similar mechanism maybe used to extend or adapt the eNB's broadcast message such to include relay support functionality, which can be safely ignored by the UEs. In other words, the eNB's broadcast message may be added with information that may be ignored by the UEs.

Fig. 2 shows a second message flow diagram for identifying a relay support by querying an eNB according to an exemplary embodiment of the present invention.

Fig. 2 shows a method of identifying of a relay supporting eNBs through custom RRC (Radio Resource Control) relaying capability request procedure.

The message formats, may base on messages from the RRC protocol such as LTE E-UTRAN RRC of 3GPP TS 36.331.

The RNs 101 can query the eNBs 100 to see if they support relaying using an RRC procedure.

The prerequisite for querying may be that the RN already got connected to the eNB using e.g. conventional UE access procedures. That is the RN first acted as it were a special UE, selected and got access to the NB. Then, the RN will request about the relaying support capability of the eNB and decide whether the requested eNB is the right one for the RN to actually associate to for the RN's deployment and service.

For querying the eNB 100 in Fig. 2 in step S200 the RN 101 sends an RN Capability Request message to the eNB 100. In step S201 the eNB 100 replies with an RN Capability Information message. eNBs 100 that do not support relaying may not recognize this message and thus ignore it. Otherwise, such eNBs, which may recognize the message may optionally, reply with a list of neighboring eNB(s) which may be capable of supporting the RN in order to ease the RN in reselecting of a suitable eNB nearby. Furthermore, such eNBs, which may recognize the message, may support the reselecting process by handing the RN over to a suitable neighbouring eNB nearby. The RN may also indicate or provide to the current eNB the list of other eNB(s) nearby the eNB, which list the RN detected.

Similar to Fig. 1, there are also extension mechanisms available for RRC messages from the UE to the eNB. The interface between RN 101 and eNB 100 is the user interface or the air interface Uu.

In another example (not shown in Fig. 2) the previous mother eNB 100 can send a list of neighboring mother eNBs to the RN and/or to other eNBs that may be available as an alternative when the current mother eNB is turned off. In this case the RN 101 can efficiently identify which other eNBs are available as an alternative mother eNB. All that may be required from the RN may be to search and obtain synchronization to one of these potential mother eNBs and select the most appropriate one, but no data may have to be exchanged with at least the other mother eNBs. This may in particular ease the setup of communication with RNs that use a different spectrum than the previous mother eNB, because these cannot be detected in parallel with normal data transfer with the mother eNB, e.g. with out-of-band relaying as explained below.

Also hybrid modes are possible, i.e. the RN 101 obtains some part of the information by one of the previous schemes and some other part by another scheme. Another hybrid scheme is that the RN requests information according to querying the mother eNB from one mother eNB and then this eNB may not only convey information about its own relaying capabilities but also about neighboring mother eNBs. Simple information may be a list of eNBs that do not support relaying and that therefore may need not to be interrogated by the RN 101 but can be ignored simply.

The SIB information element (IE) for identifying relaying support that is sent by eNBrs could include several entries such as the cell load, geographical locations where the eNBr is experiencing capacity/coverage problem or degradation, and hence support by an RN may be highly needed, another entry may be a supported mode of relaying (L1, L2, L3, etc.), or energy saving settings, if any are available. For example, the energy settings may be relevant when the eNB is scheduled to be powered off next.

The relay link (eNB-RN) or the association between eNB 100 and RN 101 can be realized either in an in-band or out-of-band fashion. In in-band relaying the relay link uses the same frequency band as that of the regular eNB-UE interface while in out-of-band relaying, a different relaying specific band or even a different air interface is used. In an example, the LTE E-UTRAN eNB-UE interface can operate in/on a carrier of 10MHz bandwidth around 2GHZ center frequency. Then in-band relaying between eNB and RN may mean that the eNB-RN interface also operates within the same carrier.

Out-band case can for example mean that the eNB-RN interface operates in/on a carrier of 10MHz around 2.4GHz.

In case of in-band relaying, the first option, e.g. using an explicit RN specific SIB, may allow the RN to be seen as a special UE upon accessing the eNB. In out-band relaying, implicit or L1 signaling seems enough, via RN-eNB air-interface specific DL synchronization channel or pilot channel. Explicit L3 signaling could also be used in addition to L1 signaling.

In other words in case of in-band relaying and if e.g. an LTE E-UTRAN air interface may be used for the link between eNB and RN, substantially all formats of the messages may conform to the formats specified for LTE E-UTRAN and in particular to the RRC protocol specified in TS 36.331.

Thus, information elements such as the SIB IE, signaling procedures and messages may be utilized which may be adapted such to signal a handover, a reselection, activation/ reactivation or deactivation of an RN. Or which may be adapted to retrieve information, whether an eNB may support a Relay Apparatus. The messages may be additional items in an RRC protocol, which may be adapted such, to transport the corresponding information.

After determining potential mother eNBs, an adequate mother eNB may have to be selected.

When an RN 101 is powered on, it may be required that the RN 101 has to be associated with an eNBr before it can become substantially fully operational. This is because the RN 101 may be not yet connected to the core network side and relaying UE connection may be feasible only through the mother eNB.

If relaying capability is implemented through eNBr broadcasting, the RN, when powered on, will listen to the different RN 101 support broadcast messages of neighboring eNBrs and will select the one that satisfies acceptable criteria for mother eNB selection.

On the other hand, if relaying capability information is to be acquired via an RRC relaying capability request procedure, the RN 101 has to send the request to the neighboring eNB(s) that the RN 101 can detect and then the RN 101 may select the one that satisfies acceptable criteria for mother eNB selection.

Several criteria can be used by the RN 101 to decide which of the eNBrs that the RN 101 has detected should be the mother eNB. Some possibilities are selecting the eNBr with the best path gain, which in many cases may default to selecting the cell in which the RN is geographically located in, or selecting the eNBr with the highest load, as it might probably need some load sharing.

A further possibility for selecting a mother eNBr is selecting the eNBr that can provide the highest data rate to the RN. This may be determined both by the path gain, the interference and the load of the eNBr. In particular an eNBr that is already running at high load and is using most of its capacity may not be able to provide sufficient backhaul capacity to the RN 101 and may thus not be selected as mother eNB for the RN.

In another example the RN 101 may select the eNBr that is having a coverage/capacity provision problem in the vicinity of the RN, as indicated by a relaying capability SIB.

Furthermore, the RN 101 may decide to select the eNBr that is not going to be powered off soon due to energy saving settings, in this way the number of subsequent re-configurations may be reduced.

In another example the RN 101 may select the eNBr that matches the relaying mode of the RN 101.

A combination of several of the criteria mentioned above could also be used in the decision process.

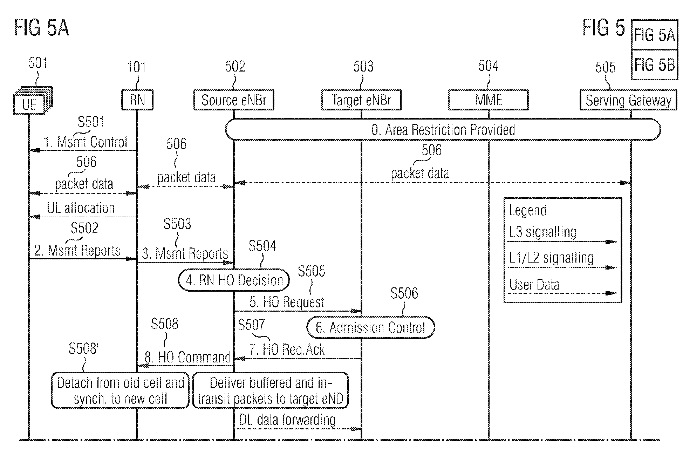

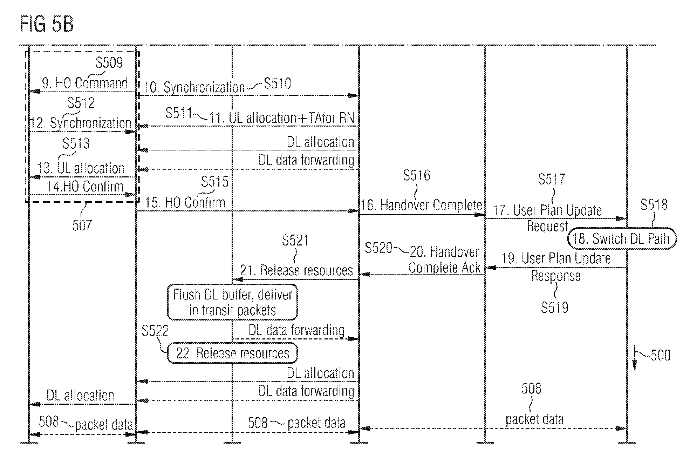

Fig. 5 shows a message flow diagram for a handover of an RN 101 and all its associated UEs 501 in LTE E-UTRAN (Evolved Universal Terrestrial Radio Access Network) with relay extension.

In particular, Fig. 5 depicts a method for mother eNB reselection/handover. In other words, Fig. 5 shows how a complete RN 101 comprising a plurality of allocated UEs 501 is handed over from a source eNBr 502 to a target eNBr 503.

Dynamic deployment of network resources may imply the possibility of handing over an RN 101 and all its associated UEs 501 to another eNB, i.e. from a source eNBr 502 to a target eNBr 503. The increasing time is indicated in Fig. 5 with arrow 500.

Both, the source eNBr 502 and the target eNBr 503 are connected to the MME (Mobility Management Entity) 504 via an S1 interface.

The MME 504 is connected to serving gateway 505, which allow the UEs 501 to access remote UEs. (not shown in Fig. 5.

In the following a handover of RN 101 from source eNBr 502 to target eNBr 503 is shown.

Before a measurement control is conducted, restriction regarding roaming of the UE may be followed in the Area Restriction. This information may have impact on the UE measurement and mobility control.

Packet data 506 is exchanged between Serving Gateway and source eNBr 502, source eNBr 502 and RN 101, and RN 101 and UE 501. The UE 501 represents substantially all the UEs being served by RN 101.

During the exchange of packet data 506 RN 101 sends in step S501 a measurement control message (Msmt Control) to the UE 501. Furthermore, the RN 101 sends a L1/L2 signalling message UL allocation (Up-Link allocation) to the UE 501.

The measurement control message initiates a measurement in the UE 501, in order to identify actual configuration parameter of the network.

Based on the measurement results of the measurement conducted by UE 501 in step S502, which results the mother eNBr 502 is getting in step S503 from the RN 101, and also other conditions such as energy saving settings and load-balancing communication from neighbouring cells, the mother eNB 502 (source eNB) decides in step S504 to handover the RN 101 to another eNBr 503.

This handover decision is communicated in step S505 to the target eNBr 503. In this handover request message the mother eNB summarizes the total resources that are required to accommodate the RN 101 to be handed over and its associated users 501.

The mother eNB 502 can at least indicate about overall (backhaul) traffic demands of the RN 101 and the RN's 101 cell with necessary UE contexts in details. It can also indicate the RN 101 location and RN 101 measurement reports about the target eNB 503 to the target eNB 503 so that the target eNB 503 can estimate the needed radio resources to accommodate the RN 101.

If the required resources are available, which is checked by the admission control procedure in step S506 in the target eNBr 503, a handover request acknowledgement message is sent in step S507 to the mother eNB502.

The mother eNB 502 then sends in step S508 a handover command to the RN 101, and from then on, the data that is destined to the RN 101 is forwarded to the target eNBr 503 until the handover process is finalized.

As long as the handover is not finalized the mother eNBr 502 can buffer data destined to the RN 101.

Upon the reception of the handover command, the RN 101 reacts differently depending on the scenario at hand.

If mother eNB 502 and target eNB 503 are synchronized with each other, no change in modes of operation of the mother eNB 502 and the target eNB 503 is required, i.e. mother eNB 502 and target eNB 503 use the same duplexing mode, frame structure, etc.

If however, the two eNBs 502, 503 operate in different modes or they are not synchronized, synchronization may be required.

In the first case (mother eNB 502 and target eNB 503 are synchronized), the RN 101 can maintain its timing and the UEs 501 that the RN 101 is serving do not have to change their timings. Thus, the UEs 501 do not have to be aware of the RN 101 handover, i.e. the handover is transparent to the UEs 501, and as such the messages in the dotted box 507 in Fig. 5 are not required. The same is true if there is only a slight timing change. This is because slight timing changes can happen anyhow at any time due to appearance of delayed or undelayed path components, and UEs are prepared to cope with them. If the required timing change slightly exceeds the tolerable value, then the RN can already proactively perform part of the timing change while being still connected to the source eNB 502 in order to reduce the time difference during the actual handover. Additionally and alternatively it may also start operation under the new mother eNB 503 with a timing offset that also reduces the timing difference as seen from the UE 501. Thus in the synchronous case, the RN 101 detaches itself 101 from the mother eNB 502 and immediately starts synchronizing with the target eNBr 503 when it gets the HO command (step S508').

In the non synchronized case the RN 101 has to change its timing, i.e. adapting the timing to the target eNBr 503, and possibly other parameters such frame structure, cell ID, scrambling code and reference signal. In this non synchronized case the RN 101 has to command a HO (handover) of the UEs to the "new" cell i.e. the RN 101 after the reconfiguration and timing change.

The messages inside the box 507 in Figure 5 are thus required. The HO command has to be sent in step S509 to the UEs 501 before the reconfiguration of the RN 101 i.e. before the RN 101 synchronizes to the target eNB 503, because the RN 101 may typically change its timing or other configurations at that time. The HO command may include a starting time i.e. a specified time in the future, when the RN starts its reconfiguration.

In order to allow the RN 101 to convey the HO commands to the UEs 501, the HO command to the RN 101 (step S508) may also include a starting time which lies well ahead in the future. The starting time of the HO commands to the UEs (step S509) may contain a somewhat later starting time, to take into account the time the RN 101 needs to reconfigure and possibly to re-synchronize. As the RN 101 may know how much time the RN 101 needs to reconfigure its timing during the HO the RN 101 may also tell the UEs 501 during the HO command (step S509). This information may make the synchronization for the UEs 501 much simpler and can speed up the process. Possibly not even an explicit synchronization may be needed; just a corresponding change of the timing may be needed.

The L1/L2 synchronization of box 507 comprises in step S510 performing UL synchronization procedure to the target eNBr 503. The target eNBr may reply in step S511 with a UL (up-link) allocation and TA (Timing Advance) information i.e. synchronization message which refers to a UL access procedure using a random access channel for RN message.

In step S512 the RN 101 receives a synchronization command from UE 501 and a DL allocation signal from the target eNBr 503. DL data that are forwarded from the mother eNB 502 to the target eNBr 503 are forwarded to the RN 101, via the target eNBr 503.

In step S513 RN 101 sends a UL allocation message to at least one of the UEs 501, which message the UE may confirm by sending a HO confirm message in step S514.

Once the RN 101 has achieved L1/L2 synchronization with the target eNBr 503 and in the non synchronized case, in addition to this, also when substantially all the UEs 501 have resynchronized with the RN 101, the RN 101 sends in step S515 a Handover Confirmation message to the new mother eNB 503. This confirmation is a composite message that includes information about each UE 501 that is being served through the RN 101.

The new mother eNB 503 then sends out in step S516 a handover complete message to the MME 504, which will then request the gateway 505 to perform a user plane update (step S517) to each UE 501 that is indicated in the composite handover confirmation message.

Packets destined to the UEs 501 served by the RN 101 will be properly routed to the new mother eNB 503 after the route update has been performed (steps S518, S519, S520).

The source eNBr 502 is advised that it can in step S521 release the resources pertaining to the RN 101, and the link between the source eNBr and RN is released. After forwarding of the final packet in flight to the target eNB 503, the final resources are released in step S521 by the source eNB 502 and the handover is finalized. This handover may be intended for load balancing and not for handing over a moving UE or a mobile UE.

It should be noted that the load-balancing handover described here may not be as delay critical as a regular handover of a moving UE. Thus, enough time could be taken to negotiate and settle resource issues for the RN cell and its UEs. HO Command may be quite different from UE specific HO Command. Upon receiving HO Command, RN might have to take time to reconfigure its cell and UEs first, some UEs might need to be degraded or even dropped due to lack of resources. In addition, MME/GW needs to be consulted too, either by source or by target NB as the system is not fully IP aware.

Some UEs may have to be assigned to different resources, if the currently used resources would collide with resources that are used for other purposes in the new eNB, e.g. resources that the target eNB intends to use to communicate with the RN. It is possible to assign resources fully dynamic in LTE via fast scheduling using PDCCH (Physical Downlink Control Channel), these allocations can be changed accordingly on the fly, but for semi-persistent scheduling the UE is granted resources for a longer time interval and these grants need to be reconfigured for the handover, possibly even before handover initiation i.e. before sending the handover command to the UE, or immediately afterwards or after the reestablishment of the link.

Packets from a remote UE (not shown in Fig. 5) are routed via the serving gateway 505, the new mother eNB 503, the RN 101 to the UE 501 as indicated by packet data 508.

Handing over the RN 101 from one eNBr 502 to another eNBr 503 may help load balancing for traffic within a network and thus, amending a network configuration.

Furthermore, on demand deactivation/reactivation of RNs 101 may also allow amending a network configuration and adapting the network configuration to the demand of the UEs.

The capability to activate or deactivate an RN in a certain area may provide the operator the flexibility to deploy extra capacity needed to satisfy peaks in users' demand but at the same time save energy when the extra capacity may not be needed anymore by simply powering off unnecessary RNs 101, i.e. RNs which may not effectively contribute to an actual network configuration. This capability may be on demand deactivation or on demand reactivation of an RN.

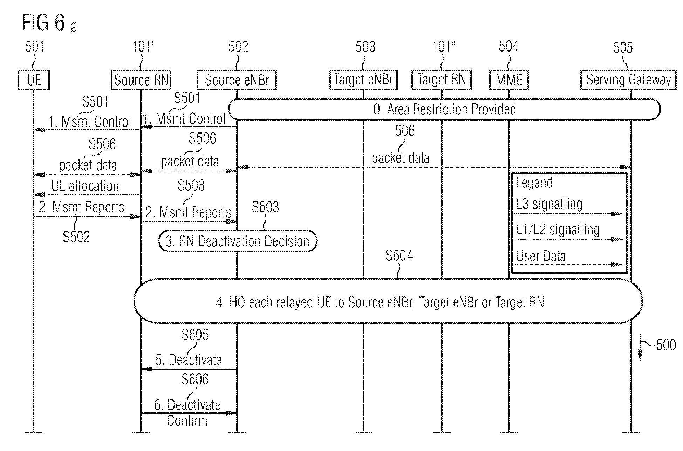

Fig. 6a illustrates the deactivation procedure by showing a message flow diagram for deactivating a Relaying Apparatus according to an exemplary embodiment of the present invention. In particular Fig. 6a shows the deactivation of an RN 101' in LTE E-UTRAN with relay extension. In Fig. 6a the RN 101' is in L1 or L2 relaying mode, i.e. the mother eNB 502 is responsible for the connection control and mobility control of the UEs 501, which are relayed by RN 101', and for the management of the UEs 501, which are relayed by the RN 101'. The UE 501 or the UEs 501 can be a single UE, at least one UE or a plurality of UEs.

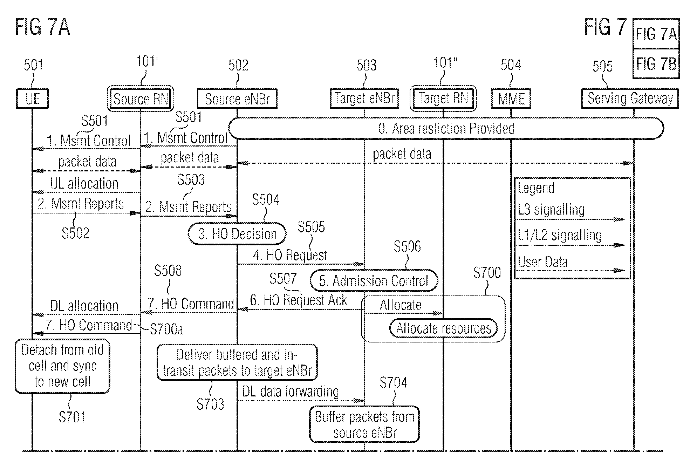

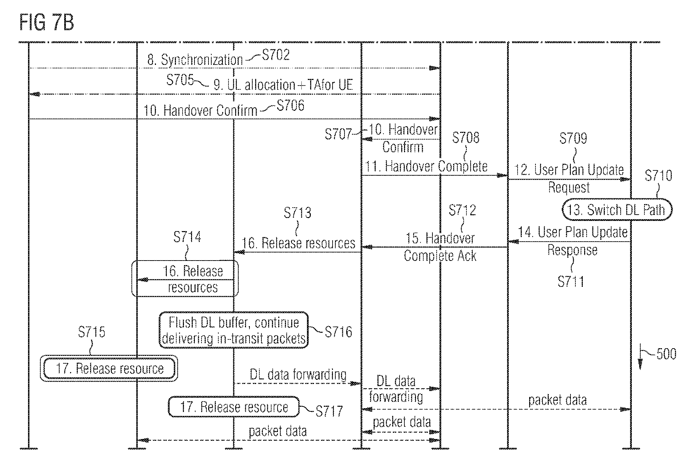

Based on the measurements from the RN 101 gathered in steps S501 and S502, the load condition in neighboring cells is determined and the mother eNB 502 (source eNBr) decides in step S603 to deactivate the RN 101'. This is true, if the load on RN 101' may have been decreased. For all the UEs 501 relayed by the RN 101' this initiates at least one handover procedure selected from the group of the handover procedures consisting of handover between two RNs 101', 101" in the same cell, handover between two RNs 101', 101" in different cells, handover between a RN 101' and its mother eNB 502 or handover between an RN 101' and an eNBr 502, 503 in another cell. These individual HO procedures (step S604) may not require a substantial extension of the handover mechanisms of relay enhanced LTE as for example shown in Fig. 7 (centralized relaying).

Once the HO for each relayed UE 501 is finalized, the mother eNB 502 sends in step S605 a deactivate command to the RN 101'.

The HO is executed before the deactivation for providing service continuity for the users currently being relayed by the RN which is about to be deactivated. This may be the case if the relaying mode is one of L1 level and L2 level where the eNB 502 may substantially fully be responsible for connection-and-mobility control of the UEs 501 and where the eNB may also be substantially responsible for the management of the relayed UEs 501.

The RN 101' deactivates itself after sending in step S606 a deactivation confirmation to the mother eNB.

The deactivation command from the eNB 502 to the RN 101' (step S605) contains parameters that are needed for future reactivation of the RN 101'. This includes timer values such as a sleep interval during which the RN completely shuts down its transceiver, and also on-duration periods during which the RN 101' may listen on a common control channel such as a paging channel to determine if the mother eNB 502 is trying to reactivate it. This procedure may be similar to the idle-mode DRX (Discontinuous Reception) procedure of LTE release 8, e.g. 3GPP TS 36.300, TS 36.321.

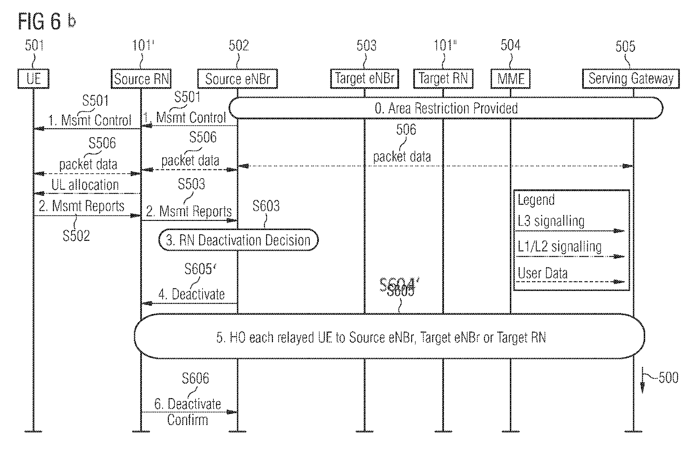

Fig. 6b shows a message flow diagram for deactivating a Relaying Apparatus wherein the RN 101' is in L3 relaying mode. The steps of Fig. 6b substantially correspond to the steps as described for Fig. 6a. As a difference in comparison to Fig. 6a, in the L3 case the Deactivation Command in step S605' is sent before the HO procedure is executed in step S604', i.e. before the RN cell is emptied or the UEs 501 are released from the RN 101'. A timer T may be started at the eNB 502 when the Deactivation Command is sent. The reception of this command (Deactivation Command) in the L3 case may trigger HO of the current users 501, or trigger emptying the cell. In the L3 case, after emptying the cell the Deactivation Confirm message in step S606 is sent back to the eNB 502. The timer T, in the L3 case, is guarding this event of handing over the UEs 501. Timer T is stopped upon the reception of the confirmation in step S606. In the L3 case, if timer T expire the eNB 502 may either retry the handover of the UEs 501 of S604' or the eNB 502 may assume that the RN is out or deactivated. Thus, Deactivation Confirm S606 may be optional. Thus, step S604' may be substantially the same as step S604.

In the relaying mode of L3 level of RN 101 the RN 101 may be considered as a wireless backhaul eNB. In this mode, the RN 101' is responsible for the connection-and-mobility control of the UEs 501 connected to the RN 101' and the RN 101' is also responsible for the management of its users, i.e. the UEs 501 connected to the RN 101'.

An alternative approach for power saving during the deactivated state can be for the powered off RNs 101' to periodically try to power on, perform the mother eNB 502 identification and/or selection and start serving UEs 501.

If the mother eNB 502 recognizes that the RN 101', which selected the mother eNB 502 is unnecessary the mother eNB 502 initiates a procedure for switching off or deactivating the RN 101' indicating the new interval of time before the new power on procedure. The mother eNB 502 can decide the power off time interval of a RN 101' on the basis of user demand estimations, e.g. on daily or weekly base.

The mother eNB 502 thus may control the network configuration by controlling the RN 101'. The RN 101' accepts the instructions and/or values from the mother eNB 502. Thus, the RN 101 and the mother eNB may cooperate.

The at least two approaches, i.e. the idle-mode DRX-like power saving and periodical power on/off, can be combined for tailored operation. The DRX-like power saving can be used on a shorter time scale, while at the same time the periodical power on/off is active on a larger time scale.

In other words, the deactivated RN may wake up at a specified occasion of a short while to listen to the mother eNB and if nothing is heard the RN will reenter the sleeping or deactivation mode again. This time will be longer than the last sleeping interval, and so forth until the sleeping interval reaches the maximum allowed duration or DRX cycle ends. Then the DRX cycle may start again.

As stated above, the load balancing handover may not be as delay critical as a regular handover of a mobile UE. Thus, enough time could be taken to negotiate and settle resource issues for the RN cell and its UEs. This, considerations on the criticism and/or criticality of the handover with respect to the delay and the need to assign UEs 501 to different resources after the handover are also valid for the function to deactivate an RN 101. In particular, a mother eNB 502 could decide to keep the RN 101' active for a longer time in order to perform measurements on the available capacity in the cell and allow neighboring eNB 502 to perform the same. However an active RN 101' may produce both intra-cell and inter-cell interference. These measurements can be used to decide how long the RN should be kept deactivated, or how long the power off and reactivation listening periods should be.

The inventive mechanisms, apparatuses and/or methods to enable dynamic deployment of RNs 101, 101' may be substantially transparent to the UEs 501, and as such may have no impact on release 8 UEs. However, changes may be made to release 8 eNBr 502, 503 and the MME 504/Serving gateway 505. A change may be the handling of composite handover messages such as the handover complete message that is sent from the target eNB 503 to the MME 504 containing information about several UEs 501, e.g. in step S516 of Fig. 5.

Dynamically deployable RNs 101 may allow to flexibly and efficiently operate, and to self-optimize or self-organize multi-hop cellular networks. The support of mobile RNs 101 may also be achieved with an architecture supporting dynamic deployment.

Load balancing and other features of SONs may also use dynamically deployable (i.e. shareable) RNs. Also, as there may be no need to associate RNs statically to eNBs and to keep all RNs always on, operators may not necessarily have to put extensive effort in finding optimal locations for the RNs through exhaustive radio planning. This may lead to reductions in the planning costs required for enabling relaying in future releases of LTE, possibly at the expense of some more capital investments.

Neighboring eNBs may share information regarding the RNs they are controlling in order to facilitate faster and smoother handover of RNs. E.g. information can be shared by exchanging lists of corresponding RN information.

Before an eNB may go into a power-off mode, the eNB can transfer or hand over the control of its sub ordinate RNs or its associated RNs to neighboring eNBs. By doing so, the scenario where a RN that has been put to sleep by its mother eNB may not become useless if the mother eNB is powered off during the RN's sleep mode, i.e. before the eNB is powered off, it checks to see if it has any RNs in sleep mode, waits till they are in listening mode, hands them over to neighboring cells, and then powers off.

Fig. 7 shows a message flow diagram for handing over of a UE from a source Relaying Apparatus 101' to a target Relaying Apparatus 101" according to an exemplary embodiment of the present invention.

In Fig. 7 a UE is handed over from a source RN 101' to a target RN 101".

Based on the measurement results that the source eNBr 502 is getting from the UE 501 (steps S501, S502, S503), the source eNBr 502 that controls the RN 101', to which the UE 501 is connected at the start of handover, decides (step S504) whether to initiate a handover.

However, in this case, the handover can be to another eNBr 503 or an RN 101" in another cell. This handover decision is communicated to the target eNBr 503.

The target eNBr 503 controls the resources of the target RN 101", and as such, the target eNBr 503 performs in step S506 admission control on behalf of the target RN 101" and commands the RN 101" to allocate S700 the necessary resources for the connection. The target RN 101" also performs the admission control to the backhaul link.

After the reception of the handover ACK message in step S507, the source eNBr 502 sends in step S508 and S700a a handover command to the UE 501 via the RN 101' causing the UE 501 to detach from the source RN 101' (step S701) and start synchronizing (step S702, S705, S706) with the target RN 101".

Meanwhile the source eNBr 502 forwards in step S703 buffered packets and received packets in flight destined to the UE 501 to the target eNBr 503 which buffers them in step S704 until the handover is complete.

When the UE 501 has achieved L1/L2 synchronization with the target RN 101" the UE 501 sends a handover confirm message (step S707) to the target eNBr 503 via the target RN 101". The UE 501 may also be a plurality of UEs 501.

Then the GW 505 is informed about the UE's new location and all arriving packets will from now on be routed to the proper eNBr 503 (steps S708, S709, S710, S711, S712).

The source eNBr 502 in step S713 is advised that it can release the resources pertaining to the UE 501. Subsequently the source eNBr 502 instructs in step S714 the source RN 101' to release the resources, and the link between the source eNBr 502 and source RN 101' for that specific UE 501 connection is released (step S715).

After forwarding of the final packet in flight (step S716) the final resources are released (step S717) by the source eNB 502 and the handover is finished.

A solution where the eNB 502 is in full control of the handover initiation (S504), admission control (S505), and data forwarding may not be efficient if the RNs are more intelligent and able to perform the resource management of the UEs that they are serving.

In other words, deploying RNs with reduced intelligence, e.g. reduced processing capabilities, compared to eNBs and deploying the RNs dynamically by means of the intelligent eNB may reduce the costs for the installed base of the network.

In an example a System Information Block Information Element, e.g. of type 3, may be utilized in order to transport the relaying capability and cell selection and reselection rules of an eNB.

The IE of SystemInformationBlockType3 furthermore may contain cell re-selection information common for intra-frequency, inter-frequency and/or inter-RAT (Radio Access Technology) cell re-selection (i.e. applicable for more than one type of cell re-selection but not necessarily all) as well as intra-frequency cell re-selection information.

SystemInformationBlockType3 may be extended with the Information Element, namely, RN-DynamicDeploymentSupport. This IE may comprise the cell load, i.e. a value indicating the cell load, a geographical location where a Deploying Apparatus is experiencing capacity and/or coverage problem, Supported mode of relaying, energy saving setting etc..

The System Information Block Information Element may be utilized for dynamically deploying RNs.

In an example the relaying capability of an eNB may be broadcasted or retrieved in the SIB IE RN-DynamicDeploymentSupport having a value of the corresponding supported mode. Example for a supported mode value is a mode-indexing positive integer.

RN-DynamicDeploymentSupport IE may be embedded into other existing SIB type(s) or new SIB type(s) as well.

In another example, the RN Capability Request message as for example described in Fig. 2,may be embedded into at least one of a RRCConnectionRequest message, a RRCConnectionSetupComplete and a UECapabilityInformation of E-UTRAN RRC specified in 3GPP TS 36.331 and sent towards the eNB. Thus, at least one element selected from the group consisting of RRCConnectionRequest message, RRCConnectionSetupComplete message and the UECapabilityInformation message may be utilized to transport the RN Capability Request message.

RN Capability Information, as described in Fig. 2, in turn may be embedded into e.g. RRCConnectionSetup message or UECapabilityEnquiry message and sent back to RN 101 in response to the request of RN 101. RN Capability Request and RN Capability Information may be specified and implemented as individual RRC messages and procedures as well. In other words, instead of utilizing an existing message for transporting the relevant information a particular message format may be defined for transporting the corresponding messages. These particularly defined messages may solely comprise at least one of the Capability Request and RN Capability Information.

In a further example a HO Command used for signaling handing off or handing over an active RN 101 and its users 501 from the source eNB 502 to the target eNB 503. The HO Command may be based on a regular HO Command with contents and formats specified for handing over the RN including its users. The HO Command may differ from a regular HO Command, which signals handing over a UE on a UE basis. In other words, the HO command may comprise information for indicating a handover of an RN including the connected UEs 501.

The contents and formats of a HO Command for handing over an RN may also comprise advanced timing information used to facilitate synchronization of the RN and its users to target eNB as for example described in box 507 of Fig. 5. The HO Command may be embedded in an RRCConnectionReconfiguration message and sent from the source eNB 502 to the RN 101. Thus, an RRCConnectionReconfiguration message may be utilized for signaling a hand over of an RN 101 including the connected UEs 501.

The HO Request may be used in preparation for a handover of an RN 101 may be based on HO Request message of the X2 interface specified in 3GPP TS 36.423 for E-UTRAN. The HO Request message of the X2 interface may be utilized by adding contents and formats concerning the RN handover. Utilizing may also mean replacing existing content with amended content. For examples amended content and amended format may specify the total resources that are required to accommodate the RN 101 and its associated users by e.g. indicating about overall (backhaul) traffic demands of the RN and its users with necessary UE contexts in details. The HO Request may also indicate the RN location and RN measurement about the target eNB, as described above.

In yet another example, the aforementioned Deactivation Confirm message, which may be used by an eNB to deactivate an RN under the control of the eNB, may be embedded or included in an RRCConnectionRelease message specified for E-UTRAN in 3GPP TS 36.331. Thus, the RRCConnectionRelease message may be utilized to transport the Deactivation Confirm message.

In other words, RN initial setup or an RN initial setup message may be transported using at least one of the IEs or procedures selected from the group of IEs and/or procedures consisting of a Broadcast System Info with SIB IE, an RRC connection setup and a UE capability procedure.

The reselection and/or the handover, may be signaled by embedding corresponding information in at least one of a Uu HO command, e.g. an RRC Connection Reconfiguration and a X2 HO request. Embedding information in a message may be utilizing the corresponding message for transporting the information in the corresponding message.

For deactivation or deactivating an RN, information for signaling the deactivation may be embedded in at least an RRC connection release message.

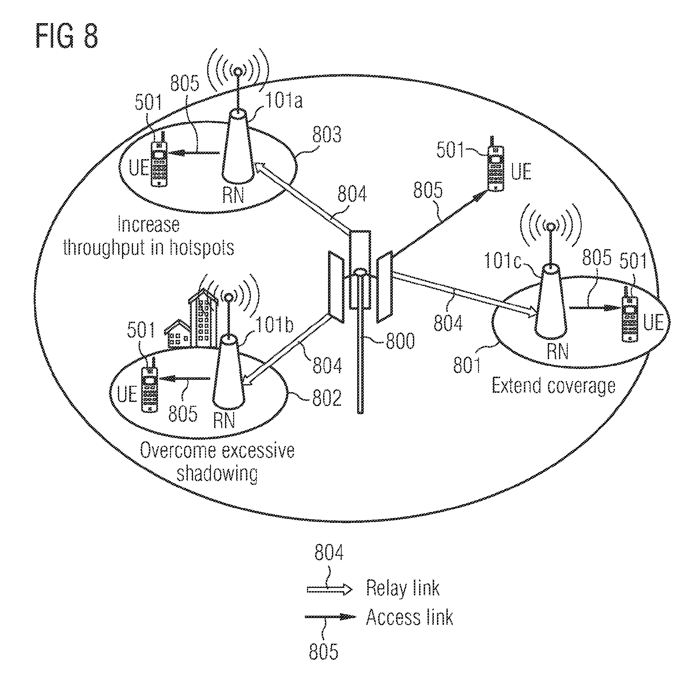

Fig. 8 shows a network diagram of an LTE radio access network deployment with fixed and/or static RNs for a better understanding of the present invention.

The eNB 800 is connected via a relay link 804 to three RNs 101a, 101b, 101c belonging to different deployment scenarios.

First RN 101a generates a first cell 803 for increasing the throughput in hotspots.

Second RN 101b generates a second cell or sector of a cell 802 (cells may always be seen as sectors) to overcome excessive shadow of buildings or valleys between buildings.

Third RN 101c generates a third cell 801 which allows extending the coverage of the eNB 800.

The relay links 804 may be based on the Uu interface.

Each RN 101a, 101b, 101c and the eNB 800 connect to UEs 501 via access links 805, which may also be based on the Uu interface.

Fig. 3 shows a block diagram of a Deploying Apparatus 100, 502, 503 according to an exemplary embodiment of the present invention.

The Deploying Apparatus 100, 502, 503 comprises an Evaluating Device 300 and a Deploying Device 301.

The Evaluating Device 300 is adapted for determining an available network configuration of a network (not shown in Fig. 3) which may be connected on the bidirectional interface link 302. The interface link 302 may be based on a Uu interface for connecting UEs.

The Evaluating Device 300 is further adapted for determining a required network configuration, e.g. a load situation, a traffic demand or some other demand.

The Deploying Device 301 is adapted for meeting the required network configuration by deploying at least one Network Apparatus of the group of Network Apparatuses consisting of a Relaying Apparatus and the Deploying Apparatus in accordance with the required network configuration. Thus, the Deploying Device 301 may control the Deploying Apparatus 100, 502, 503 and/or a Relaying Apparatus connected to the network interface link 302.

Furthermore, the Deploying Apparatus 100, 502, 503 comprise the Associating Device 303, which may allow to associate a Relaying Apparatus with the Associating Device 303 via the network interface link 302.

Fig. 4 shows a block diagram of a Relaying Apparatus 101 according to an exemplary embodiment of the present invention.

The Relaying Apparatus 101 comprises the Relaying Device 400, the Up-Linking Device 401 and the Down-Linking Device 402.

The Up-Linking Device 401 is adapted for identifying a Deploying Apparatus supporting the Relaying Apparatus 101.

The Deploying Apparatus (not shown in Fig. 4) may be connected to the bidirectional Up-Link 403, which may be based on a Uu interface. The Up-Linking Device 401 is connected with the Relaying Device 400.

The Up-Linking Device 401 is adapted for linking the identified Deploying Apparatus with the Relaying Apparatus 101.

The Relaying Apparatus 101 furthermore comprises the Down-Linking Device 402, which is adapted for linking at least one User Equipment (not shown in Fig. 4) with the Relaying Apparatus. The at least one UE may be connected by one of the bidirectional Down Links 404, which may base on the Uu interface standard.

The Relaying Apparatus 101 is adapted for relaying information between the at least one User Equipment and the Deploying Apparatus. Therefore, a connection between the Down Link 404 and the Up Link 403 via Down Linking Device 402, Relaying Device 400 and Up-Linking Device 401 may be established.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

### Acronyms and Terminology

- C-RNTI: Cell Radio Network Temporary Identifier
- DL: Downlink
- DRX: Discontinuous Reception
- eNBr: Relay-enhanced eNB
- IE: Information Element
- MIB: Master Information Block
- RAN: Radio Access Network
- RBR: Radio Band Resource
- RN: Relay Node
- RS: Relay Station
- SCH: Shared Channel
- SON: Self Organizing Network
- SIB: System Information Block
- QoS: Quality of Service
- UL: Uplink
- DL: Downlink

## Claims

1. A Deploying Apparatus (100, 502, 503) for dynamically deploying a Relaying Apparatus, comprising:
an Evaluating Device (300);
a Deploying Device (301);
wherein the Evaluating Device (300) is adapted for determining an available network configuration; and
wherein the Evaluating Device (300) is adapted for determining a required network configuration;
wherein the Deploying Device (301) is adapted for meeting the required network configuration by deploying at least one Network Apparatus of the group of Network Apparatuses consisting of a Relaying Apparatus and the Deploying Apparatus in accordance with the required network configuration.

2. The Deploying Apparatus (100, 502, 503) of claim 1, further comprising:
an Associating Device (303);
wherein the Deploying Device (301) is adapted for associating the Relaying Apparatus with the Associating Device (303) in order to deploy at least one Network Apparatus.

3. The Deploying Apparatus (100, 502, 503) of claim 1 or 2,
wherein the Deploying Device (301) is adapted for
deactivating at least one of the Relaying Apparatus and the Deploying Apparatus in order to meet the required network configuration; and/or for
handing over the Relaying Apparatus and/or a User Equipment associated with the Relaying Apparatus to another Deploying Apparatus in order to meet the required network configuration.

4. The Deploying Apparatus (100, 502, 503) of at least one of claims 1 to 3, wherein the Associating Device (303) is adapted for deactivating a Relaying Apparatus, which Relaying Apparatus tries to become associated with the Associating Device (303).

5. The Deploying Apparatus (100, 502, 503) of at least one of claims 1 to 4, wherein the Deploying Apparatus (100, 502, 503) and / or the Relaying Apparatus is at least one of the group of apparatuses consisting of
an Relay Node,
an enhanced Node B,
a relay enhanced Node B,
a base station,
a WiMAX^{™} network node,
a GSM network node,
a UMTS network node, and
an LTE network node.

6. The Deploying Apparatus (100, 502, 503) of at least one of claims 1 to 5, wherein the Evaluating Device (300) is adapted for determining at least one of
a cell load; and
a load of the Relaying Apparatus;
wherein the Deploying Device (301) is adapted for deploying the Deploying Apparatus (100, 502, 503) and/or the Relaying Apparatus in accordance with the determined load.

7. The Deploying Apparatus (100, 502, 503) of at least one of claims 1 to 6, wherein the Evaluating Device is further adapted for transmitting a neighbour list to at least one other Deploying Apparatus (100, 502, 503);
wherein the neighbour list comprise alternative Deploying Apparatuses (100, 502, 503).

8. The Deploying Apparatus (100, 502, 503) of at least one of claims 2 to 7, wherein the Associating Device (303) is further adapted for indicating that the Associating Device (303) supports a Relaying Apparatus by at least one indication selected from the group of indications consisting of
broadcasting an indication and
replying to a query of the Relaying Apparatus.

9. A Relaying Apparatus (101) comprising:
a Relaying Device (400);
an Up-Linking Device (401);
a Down-Linking Device (402);
wherein the Up-Linking Device (401) is adapted for identifying a Deploying Apparatus supporting the Relaying Apparatus (101); and
wherein the Up-Linking Device 401) is adapted for linking the identified Deploying Apparatus with the Relaying Apparatus (101);
wherein the Down-Linking Device (404) is adapted for linking at least one User Equipment with the Relaying Apparatus (101);
wherein the Relaying Device (400) is adapted for relaying information between the at least one User Equipment and the Deploying Apparatus.

10. The Relaying Apparatus (101) of claim 9, wherein the Up-Linking Device (401) is adapted for identifying a relaying capability of the Deploying Apparatus by at least one method selected from the group of identifying methods consisting of receiving a broadcast from the Deploying Apparatus; and
requesting a capability information from the Deploying Apparatus.

11. The Relaying Apparatus (101) of claim 10, wherein the Up-Linking Device (400) is adapted for selecting at least one of a plurality of identified Deploying Apparatuses by at least one selection criteria of the group of selection criteria consisting of
selecting the Deploying Apparatus with the highest path gain;
selecting the Deploying Apparatus in whose cell the Relaying Apparatus is geographically located in;
selecting the Deploying Apparatus with the highest load;
selecting the Deploying Apparatus that can provide the highest data rate to the Relaying Apparatus;
selecting the Deploying Apparatus that has a coverage and/or capacity provision problem in the vicinity of the Relaying Apparatus;
selecting a Deploying Apparatus that stays powered on; and
selecting the Deploying Apparatus that matches a relaying mode of the Relaying Apparatus.

12. The Relaying Apparatus (101) of at least one of claims 9 to 11, wherein the Down-Linking Device (402) is adapted for synchronizing the User Equipment when the Up-Linking Device (402) is handed over to another Deploying Apparatus.

13. The Relaying Apparatus (101) of at least one of claims 9 to 11, wherein the Up-Linking Device (401) is further adapted for listening to a common control channel if the Relaying Apparatus (101) is in a deactivated state.

14. The Relaying Apparatus (101) of one of claims 9 to 11,
wherein the Up-Linking Device (401) is further adapted for periodically re-activating the Relaying Apparatus from a deactivated state; and
wherein the Up-Linking Device (401) is adapted for selecting the Deploying Apparatus.

15. A method for dynamically deploying a Network Apparatus, comprising:
determining an available network configuration; and
determining a required network configuration;
meeting the required network configuration by deploying at least one Network Apparatus selected from the group of Network Apparatuses consisting of a Relaying Apparatus and
the Deploying Apparatus in accordance with the required network configuration.

16. A method for relaying comprising:
identifying a Deploying Apparatus supporting a Relaying Apparatus;
linking the identified Deploying Apparatus with the Relaying Apparatus;
linking at least one User Equipment with the Relaying Apparatus;
relaying information between the at least one User Equipment and the Deploying Apparatus.

17. A computer readable medium, comprising program code, which program code when being executed on a processor is adapted to carry out at least one method selected from the group of methods consisting of:
the method for dynamically deploying a Network Apparatus according to claim 15; and
the method for relaying of claim 16.

18. A use of a System Information Block Information Element for transmitting at least one information selected from the group of information consisting of:
a cell load;
a geographical location where a Deploying Apparatus is experiencing capacity and/or coverage problem;
a supported mode of relaying; and
an energy saving setting.
